# EUROPÄISCHE PATENTSCHRIFT

(11) **EP 4 363 243 B1**
(45) Veröffentlichungstag und Bekanntmachung des Hinweises auf die Patenterteilung: **17.09.2025**
(21) Anmeldenummer: 21827188.0
(22) Anmeldetag: 29.11.2021
(51) Int. Cl.: B60C 11/03

(54) **FAHRZEUGLUFTREIFEN**
PNEUMATIC VEHICLE TYRE
PNEUMATIQUE DE VÉHICULE

(30) Priorität: 29.06.2021 DE 102021206705
(43) Veröffentlichungstag der Anmeldung: 08.05.2024
(73) Patentinhaber: Continental Reifen Deutschland GmbH, 30175 Hannover (DE)
(72) Erfinder: BEHR, Ulrich, 30165 Hannover (DE); TOMFORDE, Willem, 30165 Hannover (DE)
(74) Vertreter: Continental Corporation
(86) Internationale Anmeldenummer: PCT/DE2021/200217
(87) Internationale Veröffentlichungsnummer: WO 2023/274436

(56) Entgegenhaltungen:
- EP-B1- 2 631 087
- EP-B1- 3 388 256
- WO-A1-2016/091412

## Beschreibung

Die Erfindung betrifft einen Fahrzeugluftreifen mit einem Laufstreifen mit zumindest einer von einer Umfangsrille begrenzten schulterseitigen Profilrippe mit vor der Umfangsrille endenden Querrillen mit Querrillenflanken und Querrillenkanten, wobei an das laufstreifeninnenseitige Ende jeder Querrille jeweils eine Zusatzrille anschließt, welche innerhalb der schulterseitigen Profilrippe endet, in Draufsicht zur Umfangsrichtung unter einem Winkel von bis zu ± 35° verläuft, eine an einer laufstreifeninnenseitigen Rillenkante endende laufstreifeninnenseitige Rillenflanke, eine an einer laufstreifenaußenseitigen Rillenkante endende laufstreifenaußenseitige Rillenflanke und einen Rillengrund mit einer Mündungskante an der Querrille aufweist.

Ein derartiger Fahrzeugluftreifen ist beispielsweise aus der DE 10 2014 225 621 A1 bekannt. Der Fahrzeugluftreifen weist einen Laufstreifen mit zumindest einer von einer Umfangsrille begrenzten schulterseitigen Profilrippe mit vor der Umfangsrille endenden Querrillen auf, wobei am laufstreifeninnenseitigen Ende der Querrillen zur Umfangsrichtung unter einem Winkel von bis zu ± 10° verlaufende Zusatzrillen einmünden, welche zumindest über den Großteil ihrer Erstreckung in radialer Richtung eine Tiefe von 1,5 mm bis 3,0 mm und eine zur Querrille zunehmende Breite aufweisen. Die Zusatzrillen verbessern die Entwässerung der Profilrippe ohne die Steifigkeit der schulterseitigen Profilrippe zu beeinträchtigen.

Ferner sind Fahrzeugluftreifen bekannt, welche einen Laufstreifen mit schulterseitigen Profilrippen und mit Querrillen aufweisen, wobei an den Querrillenflanken zur Querrillenkante verlaufende Fasen angesetzt sind, was vor allem für die Bremseigenschaften auf trockner Fahrbahn günstig ist. Ein solcher Reifen ist etwa in der DE 10 2015 202 614 A1 offenbart.

Aus der EP 2 631 087 B1 ist ein Fahrzeugluftreifen mit einem laufrichtungsgebundenen Laufstreifen mit einer zentralen Profilrippe und zwei relativ breit ausgeführten, schulterseitigen Profilrippen bekannt. Die zentrale Profilrippe ist frei von Profilnegativen. Die schulterseitigen Profilrippen sind mit V-förmig über die Laufstreifenbreite verlaufenden Querrillen versehen, wobei die Querrillen in der einen schulterseitigen Profilrippe zu jenen in der anderen schulterseitigen Profilrippe bezüglich der Umfangsrichtung gegensinnig geneigt sind und wobei die Querrillen beim Abrollen des Reifens bei Vorwärtsfahrt mit ihren laufstreifeninnenseitigen Rillenenden zuerst in den Untergrund eintreten. Zu den Querrillen gehören in die jeweilige Umfangsrille einmündende Querrillen und zwischen diesen liegende, innerhalb der schulterseitigen Profilrippen beidseitig geschlossen endende erste und zweite Querrillen, wobei sich im Bereich zwischen aufeinanderfolgenden, einmündenden Querrillen je eine erste und je eine zweite Querrille befindet. Die ersten Querrillen setzen sich, in Draufsicht betrachtet, jeweils aus zwei einen stumpfen Winkel miteinander einschließenden Rillenabschnitten zusammen. Dieser Fahrzeugluftreifen soll eine verbesserte Hochgeschwindigkeitsperformance aufweisen, wobei insbesondere eine gute Übertagung der Lenkkräften beim Fahren auf Rennstrecken gegeben sein soll.

Die EP 3 388 256 B1 offenbart einen Fahrzeugluftreifen mit einem Laufstreifen mit einer schulterseitigen Profilrippe mit Querrillen mit einem innerhalb der Bodenaufstandsfläche verlaufenden Hauptabschnitt, wobei die Querrille außerhalb der Bodenaufstandsfläche als flächige Vertiefung ausläuft. Die flächige Vertiefung weist eine Breite von mindestens 140% der Breite des Hauptabschnitts auf. Der Hauptabschnitt ist an einer Rillenwand mit einer zur Rillenkante verlaufenden Fase versehen, welche in Erstreckungsrichtung der Querrille einen Fasenhauptabschnitt und außerhalb der Bodenaufstandsfläche einen breiter als den Fasenhauptabschnitt ausgeführten Fasenendabschnitt aufweist. Der Fasenendabschnitt ist an der Außenfläche der Profilrippe von einem Kantenabschnitt der entsprechenden Rillenkante begrenzt, wobei der Kantenabschnitt eine die Querrille verbreiternde Knickstelle aufweist und wobei jeder Fasenendabschnitt entlang der flächigen Vertiefung ausläuft. Der Reifen weist eine gute Aquaplaningperformance auf, insbesondere beim Fahren von Kurven.

Es ist bekannt, dass bei der Ausgestaltung von Laufstreifenprofilen regelmäßig Zielkonflikte auftreten - die Verbesserung einer Reifeneigenschaft führt zu einer Verschlechterung einer anderen Reifeneigenschaft. Einer dieser Zielkonflikte besteht zwischen der Trockenperformance und der Nässeperformance.

Der Erfindung liegt die Aufgabe zugrunde, bei einem Fahrzeugluftreifen der eingangs genannten Art, die Trocken- und die Nässeperformance möglichst gleichermaßen zu verbessern, den entsprechenden Zielkonflikt somit auf einem technisch höheren Niveau als bisher zu lösen.

Gelöst wird die gestellte Aufgabe erfindungsgemäß dadurch, dass an zumindest einer Querrillenflanke jeder Querrille eine zur Querrillenkante reichende, eine Schrägfläche bildende Fase mit einer Fasenkante an der Querrillenflanke angesetzt ist, wobei an der Einmündung der Zusatzrille eine zwischen ihrer laufstreifenaußenseitigen Rillenflanke und der an der Querrillenflanke angesetzten Fase verlaufende, nach außen gekrümmte Eckfläche ausgebildet ist, welche an der Rippenaußenfläche eine zwischen der laufstreifenaußenseitigen Rillenkante der Zusatzrille und der Querrillenkante, zu welcher die Fase reicht, verlaufende radial äußeren Begrenzungskante und an der Querrillenflanke, an welcher die Fase angesetzt ist, eine zur Fasenkante verlaufende radial innere Begrenzungskante aufweist, wobei die Eckfläche derart gekrümmt ist, dass ihre radial äußere Begrenzungskante in Draufsicht bogenförmig verläuft und ihre radial innere Begrenzungskante ausgehend von der Fasenkante bogenförmig radial nach innen sowie zur Mündungskante des Rillengrundes zur Zusatzrille verläuft.

Gemäß der Erfindung wird somit das an sich bekannte Konzept von Fasen an Querrillen auf besondere Weise in Fahrzeugluftreifen der eingangs genannten Art integriert und durch speziell ausgestaltete, nach außen gekrümmte Eckflächen erweitert. Die Fasen sind für die Trockenperformance besonders vorteilhaft. Die gekrümmten Eckflächen ermöglichen einen besonders verwirbelungsarmen Wasserfluss aus den Zusatzrillen in die Querrillen und vergrößern im Bereich der Einmündung der Zusatzrille lokal deren Querschnitt, was für die Wasseraufnahmefähigkeit der Querrillen günstig ist. Ferner bewirken die gekrümmten Eckflächen eine Verrundung der an den Kreuzungen der Rillen vorliegenden Eckbereiche, wodurch einem Einrollen der dort befindlichen Rillenkanten wirkungsvoll entgegengewirkt wird. Sowohl die Trockenperformance als auch die Nässeperformance sind daher verbessert und der entsprechende Zielkonflikt ist auf technisch hohem Niveau gelöst.

Gemäß einer bevorzugten Ausführung ist die Zusatzrille in Draufsicht derart geneigt, dass sich ihr an der Querrille liegendes Rillenende - gegenüber ihrem anderen Rillenende - näher zum seitlichen Rand der Bodenaufstandsfläche befindet. Dies begünstig den Wasserfluss in Richtung zum seitlichen Rand der Bodenaufstandsfläche und ist daher für die Nässeperformance von zusätzlichem Vorteil.

Gemäß einer weiteren bevorzugten Ausführung weist die radial äußere Begrenzungskante der Eckfläche eine in die axiale Richtung projizierte erste Länge von 1,0 mm bis 3,0 mm und eine in die Umfangsrichtung projizierte zweite Länge von 1,0 mm bis 3,0 mm auf. Die Eckfläche ist daher nicht allzu groß ausgeführt, wirkt sich daher kaum auf die Nettokontaktfläche des Laufstreifens aus, was für die Trockenperformance günstig ist.

Der Wasserfluss von der Zusatzrille in die Querrille ist im Hinblick auf das lokale Drainageverhalten weiter verbessert, wenn die Eckfläche sowohl stetig an die an der Querrillenflanke angesetzten Fase als auch stetig an die laufstreifenaußenseitige Rillenflanke der Zusatzrille anschließt und wenn die radial äußere Begrenzungskante der Eckfläche sowohl stetig an die Querrillenkante, zu welcher die Fase reicht, als auch stetig an die laufstreifenaußenseitige Rillenkante der Zusatzrille anschließt.

Eine weitere bevorzugte Ausführung ist dadurch gekennzeichnet, dass die Fasenkante der an der Querrillenflanke angesetzten Fase in einer in radialer Richtung ermittelten konstanten Tiefe von 0,5 mm bis 2,0 mm, insbesondere von 1,0 mm bis 1,5 mm, verläuft. Eine derart ausgeführte Fase ist für die Trockenperformance von Vorteil.

Gemäß einer weiteren bevorzugten Ausführung weist die Zusatzrille - jeweils am Niveau der Rippenaußenfläche - eine auf ihre Rillenmittellinie bezogene in die Umfangsrichtung projizierte Länge von 10,0 mm bis 25,0 mm, insbesondere von 15,0 mm bis 20,0 mm, und/oder eine senkrecht zu ihrer Rillenmittellinie gemessene insbesondere konstante Breite von 0,5 mm bis 4,0 mm, insbesondere von 1,0 mm bis 3,5 mm, besonders bevorzugt von 1,5 mm bis 3,0 mm, auf. Eine derart ausgelegte Zusatzrille weist eine für die Nässeperformance vorteilhaft hohe Wasseraufnahmefähigkeit auf. Die Nettokontaktfläche des Laufstreifens wird - etwa im Vergleich mit üblichen Querrillen - kaum reduziert, was für die Trockenperformance günstig ist.

Gemäß einer weiteren bevorzugten Ausführung weist die Zusatzrille im Bereich des Rillengrundes eine in radialer Richtung ermittelte, in Richtung zur Mündungskante des Rillengrundes zunehmende Tiefe auf, welche an der Mündungskante einen Wert von 2,0 mm bis 4,0 mm, insbesondere von 2,5 mm bis 3,5 mm, aufweist. Die zur Querrille zunehmende Tiefe begünstigt den Wasserabfluss aus der Zusatzrille in die Querrille, wobei durch die nicht zu große Tiefe der Zusatzrille deren Auswirkungen auf die Steifigkeit der Profilrippe besonders geringgehalten werden, was wiederum für die Trockenperformance von Vorteil ist.

Bei der letztgenannten Ausführung ist es von Vorteil, wenn die Tiefe der Zusatzrille im Bereich des Rillengrundes an der seichtesten Stelle der Zusatzrille einen Wert von bis zu 1,0 mm, insbesondere von 0,5 mm bis 1,0 mm, aufweist oder wenn die Zusatzrille gemeinsam mit ihrem Rillengrund an ihrem der Querrille abgewandten Rillenende zur Rippenaußenfläche ausläuft. Der oben erwähnte technische Effekt wird dadurch verstärkt.

Gemäß einer weiteren bevorzugten Ausführung beträgt der Winkel, unter welchem die Zusatzrille zur Umfangsrichtung verläuft, bis zu ± 25°, insbesondere von ± 10° bis ± 20°. Dies begünstigt die Wasserableitung aus der Zusatzrille in die Querrille zusätzlich.

Gemäß einer weiteren bevorzugten Ausführung ist es vorgesehen, dass die Zusatzrille in Draufsicht gerade verläuft, was ebenfalls die Wasserableitung aus der Zusatzrille in die Querrille begünstigt.

Bei der letztgenannten bevorzugten Ausführung besteht eine bevorzugte Variante darin, dass die Eckfläche, betrachtet in jeder in radialer Richtung ausgerichteten, in Draufsicht senkrecht zur Rillenmittelline der Zusatzrille verlaufenden Schnittebene, bogenförmig verläuft und/oder dass die Eckfläche, betrachtet in jeder in radialer Richtung ausgerichteten, in Draufsicht parallel zur Rillenmittelline der Zusatzrille verlaufenden Schnittebene, als gerade Linie erscheint.

Eine weitere bevorzugte Ausführung ist dadurch gekennzeichnet, dass die Querrille an ihrem laufstreifeninnenseitigen Ende eine zwischen der laufstreifeninnenseitigen Rillenflanke der Zusatzrille und der der Eckfläche gegenüberliegenden Querrillenflanke verlaufende, gebogene Endflanke aufweist, welche stetig an die Querrillenflanke und stetig an die laufstreifeninnenseitige Rillenflanke der Zusatzrille anschließt und welche an der Rippenaußenfläche eine bogenförmig verlaufende Begrenzungskante aufweist, die stetig an die laufstreifeninnenseitige Rillenkante der Zusatzrille und stetig an die entsprechende Querrillenkante anschließt. Die Bogenflanke wirkt mit der Zusatzrille und der gekrümmten Eckfläche auf besonders vorteilhafte Weise im Hinblick auf eine verwirbelungsarme Wassereinströmung aus der Zusatzrille in die Querrille zusammen und trägt daher zu einer weiteren Verbesserung der Nässeperformance bei.

Gemäß einer weiteren bevorzugten Ausführung verläuft die an der Querrillenflanke angesetzte Fase, im Querschnitt senkrecht zur zugehörigen Querrillenkante betrachtet, zur radialen Richtung unter einem Winkel von 35° bis 55°, insbesondere von 40° bis 50°. Solche Fasen wirken einem "Einrollen" der entsprechenden Querrillenkanten wirkungsvoll entgegen, verbessern daher die Trockenperformance.

Ferner ist es für die Trockenperformance von Vorteil, wenn die an der Querrillenflanke angesetzte Fase zumindest bis zum seitlichen Rand der Bodenaufstandsfläche des Laufstreifens verläuft.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine Draufsicht auf einen Umfangsabschnitt eines schulterseitigen Bereiches eines Laufstreifens eines Fahrzeugluftreifens mit einer Ausführungsvariante der Erfindung,
Fig. 2 einen Schnitt entlang der Linie II-II in Fig. 1,
Fig. 3 eine vergrößerte Draufsicht auf das Detail Z₃ in Fig. 1,
Fig. 4 einen Schnitt entlang der Linie IV-IV in Fig. 3,
Fig. 5 einen Schnitt entlang der Linie V-V in Fig. 3,
Fig. 6 einen Schnitt entlang der Linie VI-VI in Fig. 3,
Fig. 7 eine weiter vergrößerte Draufsicht auf das Detail Z₇ in Fig. 3,
Fig. 8 einen Schnitt entlang der Linie VIII-VIII in Fig. 7,
Fig. 9 einen Schnitt entlang der Linie IX-IX in Fig. 7,
Fig. 10 eine vergrößerte Ansicht gemäß der in Fig. 7 durch den Pfeil S₁₀ angedeuteten Sichtrichtung,
Fig. 11 einen vergrößerten Schnitt entlang der Linie XI-XI der Fig. 7 und
Fig. 12 einen vergrößerten Schnitt entlang der Linie XII-XII der Fig. 7.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t).

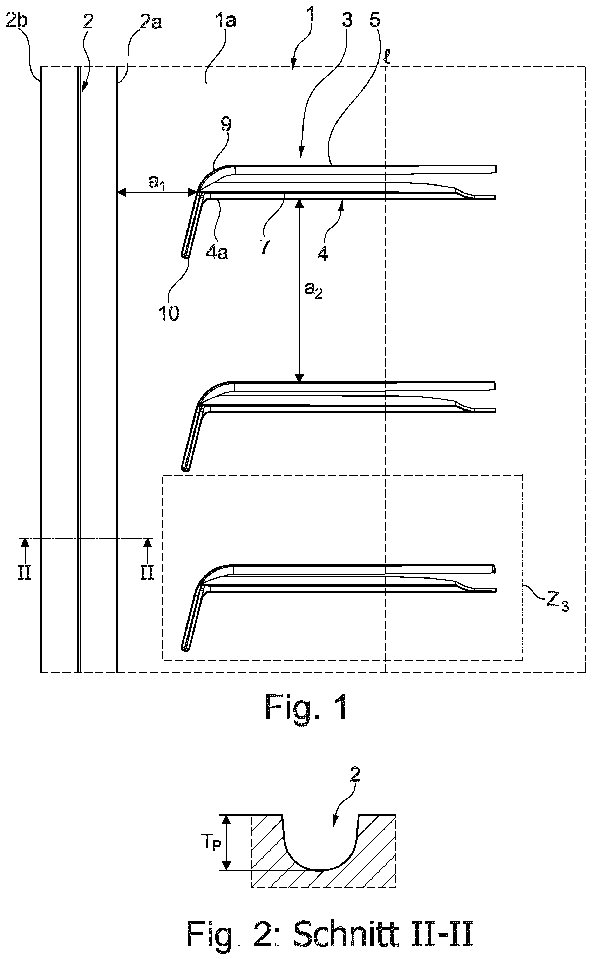

Fig. 1 zeigt eine Draufsicht auf einen Umfangsabschnitt einer zu einem Laufstreifen eines Fahrzeugluftreifens gehörenden, in Umfangsrichtung umlaufenden schulterseitigen Profilrippe 1, welche durch eine schulterseitige Umfangsrille 2 begrenzt ist. Der seitliche Rand der Bodenaufstandsfläche (ermittelt mit einem auf einer Normfelge montierten Reifen, Last bei 70 % der maximalen Tragfähigkeit, Innendruck 85 % des Normdruckes, gemäß ETRTO-Standards) ist durch eine gestrichelte Linie l gekennzeichnet. Der nicht gezeigte Bereich des Laufstreifens kann in bekannter Weise gestaltet sein.

Die schulterseitige Umfangsrille 2 verläuft beim gezeigten Ausführungsbeispiel in Draufsicht gerade, ist in radialer Richtung in der jeweils vorgesehenen Profiltiefe T_{P} (Fig. 2) ausgeführt, welche für Personenkraftwagen, Vans oder Light-Trucks üblicherweise 6,5 mm bis 10,0 mm beträgt, und weist an der Laufstreifenperipherie eine an der schulterseitigen Profilrippe 1 ausgebildete laufstreifenaußenseitige Rillenkante 2a und eine laufstreifeninnenseitige Rillenkante 2b auf, wobei die Rillenkanten 2a, 2b in Draufsicht gerade verlaufen.

Die schulterseitige Profilrippe 1 weist eine an der Laufstreifenperipherie liegende Rippenaußenfläche 1a auf und ist mit einer Vielzahl von in Draufsicht vorzugsweise parallel zueinander verlaufenden Querrillen 3 versehen. Die Querrillen 3 verlaufen komplett innerhalb der schulterseitigen Profilrippe 1, reichen über den seitlichen Rand der Bodenaufstandsfläche (Linie l) hinaus, enden laufstreifeninnenseitig vor der laufstreifenaußenseitigen Rillenkante 2a der schulterseitigen Umfangsrille 2 in einem an der Rippenaußenfläche 1a in axialer Richtung ermittelten Abstand a₁ von 2,0 mm bis 10,0 mm, insbesondere von mindestens 5,0 mm, und weisen an der Rippenaußenfläche 1a jeweils zwei in Draufsicht gerade, parallel zueinander und zur axialen Richtung verlaufende, über den seitlichen Rand der Bodenaufstandsfläche (Linie l) hinausreichende Querrillenkanten 4, 5 auf. Die Querrillenkante 4 weist einen die Querrillenkante 5 laufstreifeninnenseitig überragenden Kantenendabschnitt 4a auf. In Umfangsrichtung unmittelbar aufeinanderfolgende Querrillen 3 sind - bezogen auf die zueinander nächstliegenden Querrillenkanten 4, 5 - unter in Umfangsrichtung ermittelten gegenseitige Abstände a₂ von vorzugsweise 15,0 mm bis 35,0 mm ausgebildet.

Die weitere Ausgestaltung der Querrillen 3 wird nachfolgend anhand einer einzelnen Querrille 3 erläutert.

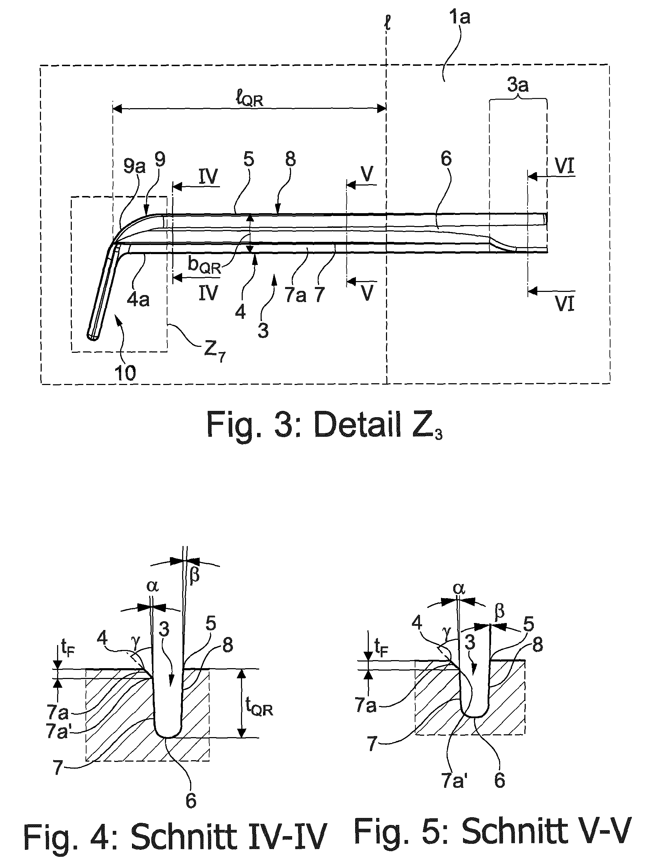

Gemäß Fig. 3 weist die Querrille 3 eine zwischen sowie senkrecht zu den Querrillenkanten 4, 5 ermittelte Breite b_{QR} von 2,3 mm bis 7,0 mm sowie ferner - jeweils innerhalb der Bodenaufstandsfläche - eine in radialer Richtung ermittelte maximale Tiefe t_{QR} (Fig. 4) von 70% bis 100% der Profiltiefe T_{P} (Fig. 2) und eine an der Rippenaußenfläche 1a ermittelte, in die axiale Richtung projizierte Länge l_{QR}, welche sich aus dem jeweils gewählten Abstand a₁ (Fig. 1) ergibt, auf.

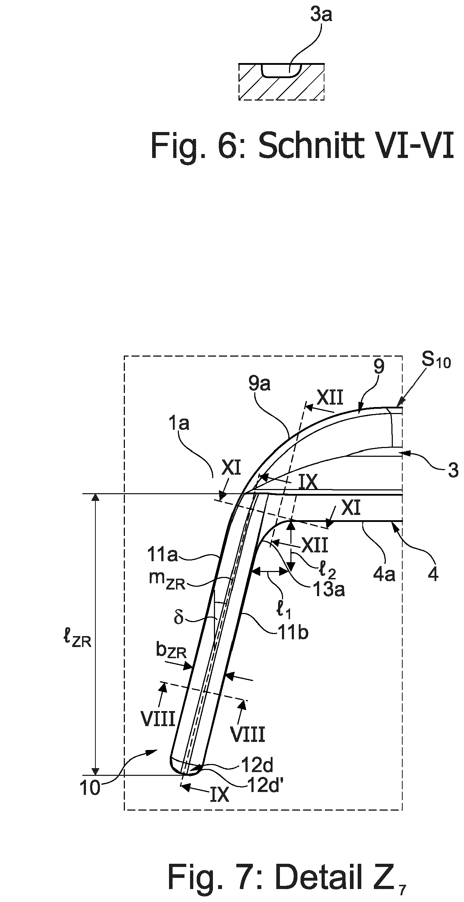

Die Querrille 3 ist durch einen Querrillengrund 6, eine von der Querrillenkante 5 ausgehende Querrillenflanke 8, eine Querrillenflanke 7, eine an der Querrillenflanke 7 angesetzte und zur Querrillenkante 4 reichende Fase 7a sowie durch eine am laufstreifeninnenseitigen Rillenende befindliche Endflanke 9 begrenzt und weist beim gezeigten Ausführungsbeispiel einen komplett außerhalb der Bodenaufstandsfläche als flache Vertiefung ausgebildeten Rillenauslauf 3a (vergl. Fig. 6, Lage der Schnittlinie VI-VI siehe Fig. 3) auf, an welchem die Querrillenflanken 7, 8 beim gezeigten Ausführungsbeispiel enden (in Fig. 3 nicht bzw. kaum zu erkennen). Der Querrillengrund 6 verläuft über die gesamte Querrille 3, ist daher im Rillenauslauf 3a fortgeführt, und ist, im Querschnitt senkrecht zu den Querrillenkanten 4, 5 betrachtet, U-förmig gerundet ausgeführt (Fig. 4, Fig. 5).

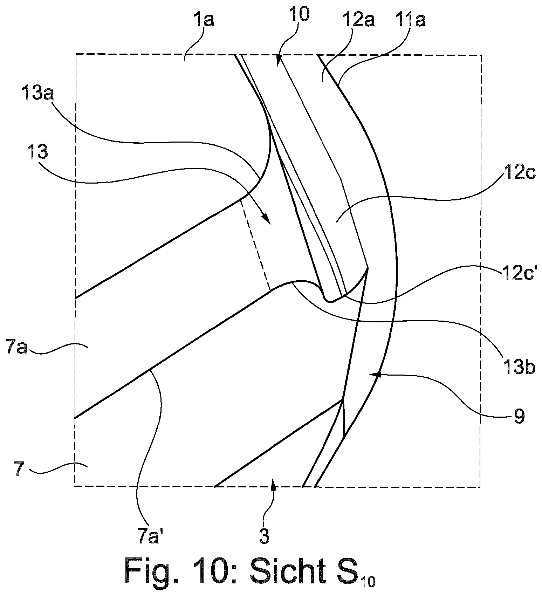

Wie Fig. 4 und Fig. 5 zeigen, verlaufen die Querrillenflanken 7, 8, im Querschnitt der Querrille 3 betrachtet, zur radialen Richtung unter einem Winkel α (Querrillenflanke 7), β (Querrillenflanke 8) von jeweils 0° bis 5°, insbesondere von jeweils bis zu 3°. Die Fase 7a ist eine Schrägfläche, welche - im Querschnitt senkrecht zur Querrillenkante 4 betrachtet - als gerade Linie erscheint, wobei die Fase 7a zur radialen Richtung unter einem konstanten Winkel γ von 35° bis 55°, insbesondere von 40° bis 50°, verläuft, in einer in radialer Richtung ermittelten konstante Tiefe t_{F} von 0,5 mm bis 2,0 mm, insbesondere von 1,0 mm bis 1,5 mm, an die Querrillenflanke 7 anschließt, eine in der Tiefe t_{F} verlaufende Fasenkante 7a' (siehe auch Fig. 10) aufweist und im Rillenauslauf 3a ausläuft (Fig. 3).

Wie Fig. 3 zeigt, schließt die Endflanke 9 an das laufstreifeninnenseitige Ende der Querrillenflanke 8 an, ist eine gekrümmte Fläche (vergl. Fig. 10) und weist an der Rippenaußenfläche 1a eine in Draufsicht bogenförmig verlaufende Begrenzungskante 9a auf, welche stetig (knickpunktfrei, "tangential") an das laufstreifeninnenseitige Ende der Querrillenkante 5 anschließt und welche den Kantenendabschnitt 4a der Querrillenkante 4 in axialer Richtung laufstreifeninnenseitig überragt.

Gemäß Fig. 1 schließt an das laufstreifeninnenseitige Ende jeder Querrille 3 über die Querrillenflanke 7, der gebogenen Endflanke 9 gegenüberliegend, jeweils eine innerhalb der schulterseitigen Profilrippe 1 endende, in Draufsicht langgestreckte Zusatzrille 10 an (vergl. Fig. 3), wobei sämtliche Zusatzrillen 10 beim gezeigten Ausführungsbeispiel in Draufsicht parallel zueinander verlaufen.

Die weitere Ausführung der Zusatzrillen 10 wird anschließend anhand einer einzelnen Zusatzrille 10 erläutert.

Gemäß Fig. 7 weist die Zusatzrille 10 eine in Draufsicht in ihrer Erstreckungsrichtung ausgerichtete Rillenmittelline m_{ZR} auf, wobei die Zusatzrille 10 in Draufsicht gerade sowie - bezogen auf die Rillenmittelline m_{ZR} - zur Umfangsrichtung unter einem Winkel δ von bis zu ± 35°, insbesondere von bis ± 25°, bevorzugt von ± 10° bis ± 20°, verläuft und beim gezeigten Ausführungsbeispiel derart geneigt ist, dass sich ihr an der Querrille 3 liegendes Rillenende - gegenüber ihrem anderen Rillenende - näher zum seitlichen Rand der Bodenaufstandsfläche (Linie l, vergl. Fig. 3) befindet.

Die Zusatzrille 10 weist - jeweils an der Rippenaußenfläche 1a - eine laufstreifeninnenseitige Rillenkante 11a und eine laufstreifenaußenseitige Rillenkante 11b auf, wobei die Rillenkanten 11a, 11b in Draufsicht gerade, parallel zueinander sowie unter dem erwähnten Winkel δ verlaufen, wobei die laufstreifeninnenseitige Rillenkante 11a stetig an die Begrenzungskante 9a der Endflanke 9 anschließt und die laufstreifenaußenseitige Rillenkante 11b in einem in Umfangsrichtung ermittelten Abstand vor dem Kantenendabschnitt 4a der Querrillenkante 4 endet. Die Zusatzrille 10 weist - jeweils am Niveau der Rippenaußenfläche 1a ermittelt - eine auf die Rillenmittelline m_{ZR} bezogene in die Umfangsrichtung projizierte Länge l_{ZR} von 10,0 mm bis 25,0 mm, insbesondere von 15,0 mm bis 20,0 mm, und eine senkrecht zur Rillenmittelline m_{ZR} zwischen den Rillenkanten 11a, 11b gemessene konstante Breite b_{ZR} von 0,5 mm bis 4,0 mm, bevorzugt von 1,0 mm bis 3,5 mm, besonders bevorzugt von 1,5 mm bis 3,0 mm, auf.

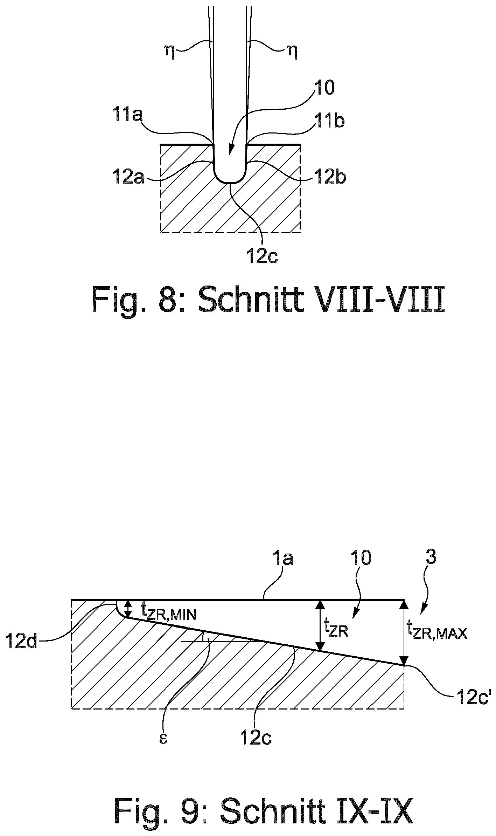

Gemäß Fig. 8 ist die Zusatzrille 10 - jeweils im Querschnitt senkrecht zur Rillenmittelline m_{ZR} betrachtet (vergl. Lage der Schnittlinie VIII-VIII in Fig. 7) - U-förmig ausgeführt sowie durch eine an die laufstreifeninnenseitige Rillenkante 11a anschließende, laufstreifeninnenseitige Rillenflanke 12a, eine an die laufstreifenaußenseitige Rillenkante 11b anschließende, laufstreifenaußenseitige Rillenflanke 12b und einen zwischen den Rillenflanken 12a, 12b verlaufenden Rillengrund 12c begrenzt. Gemäß Fig. 10 ist radial innerhalb der Einmündung der Zusatzrille 10 die Querrillenflanke 7 fortgeführt, sodass diese mit der gekrümmten Endflanke 9 zusammentrifft.

Wie Fig. 8 ferner zeigt, verlaufen die laufstreifeninnenseitige Rillenflanke 12a und die laufstreifenaußenseitigen Rillenflanke 12b, im Querschnitt senkrecht zur Rillenmittelline m_{ZR} betrachtet, zur radialen Richtung jeweils unter einem Winkel η von 0° bis 5°, insbesondere von bis zu 3°. Die laufstreifeninnenseitige Rillenflanke 12a schließt - in Analogie zur zugehörigen laufstreifeninnenseitigen Rillenkante 11a - stetig ("knickfrei", "kantenfrei") an die Endflanke 9 an (Fig. 7, Fig. 10).

Der Rillengrund 12c der Zusatzrille 10 weist an der Querrillenflanke 7 eine U-förmig gerundete Mündungskante 12c' auf (Fig. 10) und ist - wie Fig. 9 zeigt - im entlang der Rillenmittellinie m_{ZR} ausgerichteten Längsschnitt betrachtet (vergl. Lage der Schnittlinie IX-IX in Fig. 7), derart relativ zur Rippenaußenfläche 1a unter einem konstanten Winkel ε geneigt, dass die Zusatzrille 10 im Bereich des Rillengrundes 12c eine in radialer Richtung ermittelte, in Richtung zur Querrille 3, daher in Richtung zur Mündungskante 12c', kontinuierlich zunehmende Tiefe t_{ZR} aufweist, welche an der Mündungskante 12c' einen Wert t_{ZR,MAX} von 2,0 mm bis 4,0 mm, insbesondere von 2,5 mm bis 3,5 mm, und an seichtesten Stelle der Zusatzrille 12 einen Wert t_{ZR,MIN} von bis zu 1,0 mm, insbesondere von 0,5 mm bis 1,0 mm, aufweist. Beim gezeigten Ausführungsbeispiel weist die Zusatzrille 10 an ihrem der Querrille 3 abgewandten Rillenende eine Endflanke 12d auf, welche - jeweils im entlang der Mittellinie m_{ZR} ausgerichteten Längsschnitt - betrachtet, kreisbogenförmig verläuft, in der Tiefe t_{ZR,MIN} stetig an den Rillengrund 12c anschließt und welche - wie Fig. 7 zeigt - an der Rippenaußenfläche 1a eine kreisbogenförmig verlaufende, stetig an die Rillenkanten 11a, 11b anschließende Begrenzungskante 12d' aufweist. Alternativ kann die Zusatzrille 10 gemeinsam mit dem Rillengrund 12c an ihrem der Querrille 3 abgewandten Rillenende an der Rippenaußenfläche 1a auslaufen, sodass keine Endflanke 12d vorgesehen ist und die Tiefe t_{ZR,MIN} (Fig. 9) daher nicht vorhanden ist bzw. 0,0 mm beträgt.

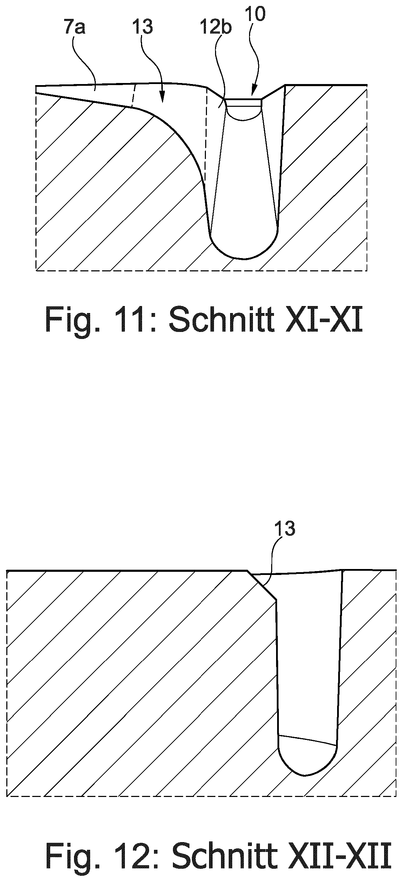

Wie Fig. 10 und Fig. 11 in Kombination miteinander zeigen, ist an der an der Querrille 3 (Fig. 10) liegenden Einmündung der Zusatzrille 10 eine zwischen der an der Querrillenflanke 7 ausgebildeten Fase 7a und der laufstreifenaußenseitigen Rillenflanke 12b der Zusatzrille 10 (Fig. 11) verlaufende, durchgehend nach außen gekrümmte Eckfläche 13 ausgebildet, wobei die Eckfläche 13 sowohl stetig an die Fase 7a als auch stetig an die laufstreifenaußenseitige Rillenflanke 12b (Fig. 11) anschließt (gegenseitige Anschlussbereiche strichliert angedeutet). Der Ausdruck "durchgehend gekrümmt" bedeutet, dass die Eckfläche 13 frei von ebenen Flächenbereichen sowie in im Inneren frei von Kanten bzw. Knickstellen ist. Der Ausdruck "nach außen gekrümmt" bedeutet, dass die Eckfläche kuppelförmig gekrümmt ist und daher eine Abrundung (Verrundung) - und nicht etwa eine Einbuchtung - begrenzt bzw. bildet.

Fig. 11 zeigt einen Schnitt im Bereich der Eckfläche 13 gemäß der in Fig. 7 durch die Linie XI-XI gekennzeichneten, in radialer Richtung ausgerichteten Schnittebene. Diese Schnittebene verläuft in Draufsicht senkrecht zur Rillenmittellinie m_{ZR} der Zusatzrille 10. Wie Fig. 11 für die durch die Linie XI-XI gekennzeichnete Schnittebene zeigt, verläuft die Eckfläche 13 - betrachtet in jeder in radialer Richtung ausgerichteten, in Draufsicht senkrecht zur Rillenmittellinie m_{ZR} der Zusatzrille 10 verlaufenden Schnittebene - bogenförmig.

Fig. 12 zeigt einen Schnitt im Bereich der Eckfläche 13 gemäß der in Fig. 7 durch die Linie XII-XII gekennzeichneten, in radialer Richtung ausgerichteten Schnittebene. Diese Schnittebene verläuft in Draufsicht parallel zur Rillenmittellinie m_{ZR} der Zusatzrille 10. Wie Fig. 12 für die durch die Linie XII-XII gekennzeichnet Schnittebene zeigt, erscheint die Eckfläche 13 - betrachtet in jeder in radialer Richtung ausgerichteten, in Draufsicht parallel zur Rillenmittellinie m_{ZR} der Zusatzrille 10 verlaufenden Schnittebene - als gerade Linie.

Gemäß Fig. 10 weist die Eckfläche 13 an der Rippenaußenfläche 1a eine radial äußere Begrenzungskante 13a und an der Querrillenflanke 7 eine radial innere Begrenzungskante 13b auf. Wie Fig. 7 zeigt, verläuft die radial äußere Begrenzungskante 13a in Draufsicht kreisbogenförmig, schließt in Draufsicht sowohl stetig an die Querrillenkante 4, also an den Kantenendabschnitt 4a, als auch stetig an die laufstreifenaußenseitige Rillenkante 11b der Zusatzrille 10 an. Ferner weist die radial äußere Begrenzungskante 13a eine in die axiale Richtung projizierte Länge l₁ von 1,0 mm bis 3,0 mm und eine in die Umfangsrichtung projizierte Länge l₂ von 1,0 mm bis 3,0 mm auf. Gemäß Fig. 10 schließt die radial innere Begrenzungskante 13b stetig an die Fasenkante 7a' an, verläuft ausgehend von der Fasenkante 7a' bogenförmig radial nach innen und schließt stetig an die Mündungskante 12c' des Rillengrunds 12c der Zusatzrille 10 an.

Die Erfindung ist auf das beschriebene Ausführungsbeispiel nicht beschränkt.

Die Querrillen 3 verlaufen - bezogen auf eine in Draufsicht mittig zwischen den Querrillenkanten 4, 5 verlaufende Rillenmittellinie - zur axialen Richtung insbesondere unter einem Winkel von 0° bis 25°. Die Endflanke 9 der Querrillen 3 kann auch auf herkömmliche Weise ausgeführt sein, muss daher nicht gebogen verlaufen. Die Fase 7a muss nicht über die Bodenaufstandsfläche hinausverlaufen, erstreckt sich bevorzugter Weise jedoch ausgehend von der gekrümmten Eckfläche 13 zumindest bis zum seitlichen Rand der Bodenaufstandsfläche. Neben den beschriebenen Querrillen 3, in welche die Zusatzrillen 10 einmünden, können noch weitere Querrillen in der schulterseitigen Profilrippe 1 vorgesehen sein. Die Zusatzrillen 10 können in Draufsicht auch gebogen verlaufen, wobei sich bei solchen Zusatzrillen 10 der erwähnte Winkel δ auf eine die Enden der gebogen verlaufenden Rillenmittelline m_{ZR} verbindenden geraden Linie bezieht. Die Tiefe t_{ZR} der Zusatzrille 10 kann konstant ausgeführt sein.

### Bezugszeichenliste

- 1: schulterseitige Profilrippe
- 1a: Rippenaußenfläche
- 2: schulterseitige Umfangsrille
- 2a: laufstreifenaußenseitige Rillenkante
- 2b: laufstreifeninnenseitige Rillenkante
- 3: Querrille
- 3a: Rillenauslauf
- 4: Querrillenkante
- 4a: Kantenendabschnitt
- 5: Querrillenkante
- 6: Querrillengrund
- 7: Querrillenflanke
- 7a: Fase
- 7a': Fasenkante
- 8: Querrillenflanke
- 9: Endflanke
- 9a: Begrenzungskante
- 10: Zusatzrille
- 11a: laufstreifeninnenseitige Rillenkante
- 11b: laufstreifenaußenseitige Rillenkante
- 12a: laufstreifeninnenseitige Rillenflanke
- 12b: laufstreifenaußenseitige Rillenflanke
- 12c: Rillengrund
- 12c': Mündungskante
- 12d: Endflanke
- 12d': Begrenzungskante
- 13: gekrümmte Eckfläche
- 13a: radial äußere Begrenzungskante
- 13b: radial innere Begrenzungskante
- a₁, a₂: Abstand
- b_{QR}, b_{ZR}: Breite
- l: Linie (seitlicher Rand der Bodenaufstandsfläche)
- l₁, l₂: projizierte Länge
- I_{QR}, I_{ZR}: Länge
- m_{ZR}: Rillenmittellinie
- t_{F}, t_{ZR}: Tiefe
- t_{QR}: maximale Tiefe
- t_{ZR, MAX,} t_{ZR, MIN}: Wert
- T_{P}: Profiltiefe
- S₁₀: Pfeil
- Z₃, Z₇: Detail
- α, β, γ, δ, ε, η: Winkel

## Patentansprüche

1. Fahrzeugluftreifen mit einem Laufstreifen mit zumindest einer von einer Umfangsrille (2) begrenzten schulterseitigen Profilrippe (1) mit vor der Umfangsrille (2) endenden Querrillen (3) mit Querrillenflanken (7, 8) und Querrillenkanten (4, 5), wobei an das laufstreifeninnenseitige Ende jeder Querrille (3) jeweils eine Zusatzrille (10) anschließt, welche innerhalb der schulterseitigen Profilrippe (1) endet, in Draufsicht zur Umfangsrichtung unter einem Winkel (δ) von bis zu ± 35° verläuft, eine an einer laufstreifeninnenseitigen Rillenkante (11a) endende laufstreifeninnenseitige Rillenflanke (12a), eine an einer laufstreifenaußenseitigen Rillenkante (11b) endende laufstreifenaußenseitige Rillenflanke (12b) und einen Rillengrund (12c) mit einer Mündungskante (12c') an der Querrille (3) aufweist,
**dadurch gekennzeichnet,**
**dass** an zumindest einer Querrillenflanke (7) jeder Querrille (3) eine zur Querrillenkante (4) reichende, eine Schrägfläche bildende Fase (7a) mit einer Fasenkante (7a') an der Querrillenflanke (7) angesetzt ist,
wobei an der Einmündung der Zusatzrille (10) eine zwischen ihrer laufstreifenaußenseitigen Rillenflanke (12b) und der an der Querrillenflanke (7) angesetzten Fase (7a) verlaufende, nach außen gekrümmte Eckfläche (13) ausgebildet ist, welche an der Rippenaußenfläche (1a) eine zwischen der laufstreifenaußenseitigen Rillenkante (11b) der Zusatzrille (10) und der Querrillenkante (4), zu welcher die Fase (7a) reicht, verlaufende radial äußeren Begrenzungskante (13a) und an der Querrillenflanke (7), an welcher die Fase (7a) angesetzt ist, eine zur Fasenkante (7a') verlaufende radial innere Begrenzungskante (13b) aufweist,
wobei die Eckfläche (13) derart gekrümmt ist, dass ihre radial äußere Begrenzungskante (13a) in Draufsicht bogenförmig verläuft und ihre radial innere Begrenzungskante (13b) ausgehend von der Fasenkante (7a') bogenförmig radial nach innen sowie zur Mündungskante (12c') des Rillengrundes (12c) zur Zusatzrille (10) verläuft.

2. Fahrzeugluftreifen nach Anspruch 1, **dadurch gekennzeichnet, dass** die Zusatzrille (10) in Draufsicht derart geneigt ist, dass sich ihr an der Querrille (3) liegendes Rillenende - gegenüber ihrem anderen Rillenende - näher zum seitlichen Rand der Bodenaufstandsfläche (Linie l) befindet.

3. Fahrzeugluftreifen nach Anspruch 1 oder 2, **dadurch gekennzeichnet, dass** die radial äußere Begrenzungskante (13a) der Eckfläche (13) eine in die axiale Richtung projizierte erste Länge (l₁) von 1,0 mm bis 3,0 mm und eine in die Umfangsrichtung projizierte zweite Länge (l₂) von 1,0 mm bis 3,0 mm aufweist.

4. Fahrzeugluftreifen nach einem der Ansprüche 1 bis 3, **dadurch gekennzeichnet, dass** die Eckfläche (13) sowohl stetig an die an der Querrillenflanke (7) angesetzten Fase (7a) als auch stetig an die laufstreifenaußenseitige Rillenflanke (12b) der Zusatzrille (10) anschließt und
dass die radial äußere Begrenzungskante (13a) der Eckfläche (13) sowohl stetig an die Querrillenkante (4), zu welcher die Fase (7a) reicht, als auch stetig an die laufstreifenaußenseitige Rillenkante (11b) der Zusatzrille (10) anschließt.

5. Fahrzeugluftreifen nach einem der Ansprüche 1 bis 4, **dadurch gekennzeichnet, dass** die Fasenkante (7a') der an der Querrillenflanke (7) angesetzten Fase (7a) in einer in radialer Richtung ermittelten konstanten Tiefe (t_{F}) von 0,5 mm bis 2,0 mm, insbesondere von 1,0 mm bis 1,5 mm, verläuft.

6. Fahrzeugluftreifen nach einem der Ansprüche 1 bis 5, **dadurch gekennzeichnet, dass** die Zusatzrille (10) - jeweils am Niveau der Rippenaußenfläche (1a) - eine auf ihre Rillenmittellinie (m_{ZR}) bezogene in die Umfangsrichtung projizierte Länge (l_{ZR}) von 10,0 mm bis 25,0 mm, insbesondere von 15,0 mm bis 20,0 mm,
und/oder
eine senkrecht zu ihrer Rillenmittellinie (m_{ZR}) gemessene insbesondere konstante Breite (b_{ZR}) von 0,5 mm bis 4,0 mm, insbesondere von 1,0 mm bis 3,5 mm, besonders bevorzugt von 1,5 mm bis 3,0 mm, aufweist.

7. Fahrzeugluftreifen nach einem der Ansprüche 1 bis 6, **dadurch gekennzeichnet, dass** die Zusatzrille (10) im Bereich des Rillengrundes (12c) eine in radialer Richtung ermittelte, in Richtung zur Mündungskante (12c') des Rillengrundes (12c) zunehmende Tiefe (t_{ZR}) aufweist, welche an der Mündungskante (12c') einen Wert (t_{ZR, MAX}) von 2,0 mm bis 4,0 mm, insbesondere von 2,5 mm bis 3,5 mm, aufweist.

8. Fahrzeugluftreifen nach Anspruch 7, **dadurch gekennzeichnet, dass** die Tiefe (t_{ZR}) der Zusatzrille (10) im Bereich des Rillengrundes (12c) an der seichtesten Stelle der Zusatzrille (10) einen Wert (t_{ZR}, _{MIN}) von bis zu 1,0 mm, insbesondere von 0,5 mm bis 1,0 mm, aufweist oder
dass die Zusatzrille (10) gemeinsam mit ihrem Rillengrund (12c) an ihrem der Querrille (3) abgewandten Rillenende zur Rippenaußenfläche (1a) ausläuft.

9. Fahrzeugluftreifen nach einem der Ansprüche 1 bis 8, **dadurch gekennzeichnet, dass** der Winkel (δ), unter welchem die Zusatzrille (10) zur Umfangsrichtung verläuft, bis zu ± 25°, insbesondere von ± 10° bis ± 20°, beträgt.

10. Fahrzeugluftreifen nach einem der Ansprüche 1 bis 9, **dadurch gekennzeichnet, dass** die Zusatzrille (10) in Draufsicht gerade verläuft.

11. Fahrzeugluftreifen nach Anspruch 10, **dadurch gekennzeichnet,**
**dass** die Eckfläche (13), betrachtet in jeder in radialer Richtung ausgerichteten, in Draufsicht senkrecht zur Rillenmittelline (m_{ZR}) der Zusatzrille (10) verlaufenden Schnittebene, bogenförmig verläuft und/oder
**dass** die Eckfläche (13), betrachtet in jeder in radialer Richtung ausgerichteten, in Draufsicht parallel zur Rillenmittelline (m_{ZR}) der Zusatzrille (10) verlaufenden Schnittebene, als gerade Linie erscheint.

12. Fahrzeugluftreifen nach einem der Ansprüche 1 bis 11, **dadurch gekennzeichnet, dass** die Querrille (3) an ihrem laufstreifeninnenseitigen Ende eine zwischen der laufstreifeninnenseitigen Rillenflanke (12a) der Zusatzrille (10) und der der Eckfläche (13) gegenüberliegenden Querrillenflanke (8) verlaufende, gebogene Endflanke (9) aufweist,
welche stetig an die Querrillenflanke (8) und stetig an die laufstreifeninnenseitige Rillenflanke (12) der Zusatzrille (10) anschließt und
welche an der Rippenaußenfläche (1a) eine bogenförmig verlaufende Begrenzungskante (9a) aufweist, die stetig an die laufstreifeninnenseitige Rillenkante (11a) der Zusatzrille (10) und stetig an die entsprechende Querrillenkante (5) anschließt.

13. Fahrzeugluftreifen nach einem der Ansprüche 1 bis 12, **dadurch gekennzeichnet, dass** die an der Querrillenflanke (7) angesetzte Fase (7a), im Querschnitt senkrecht zur zugehörigen Querrillenkante (4) betrachtet, zur radialen Richtung unter einem Winkel (γ) von 35° bis 55°, insbesondere von 40° bis 50°, verläuft.

14. Fahrzeugluftreifen nach einem der Ansprüche 1 bis 13, **dadurch gekennzeichnet, dass** die an der Querrillenflanke (7) angesetzte Fase (7a) zumindest bis zum seitlichen Rand (Linie l) der Bodenaufstandsfläche des Laufstreifens verläuft.

## Claims

1. Pneumatic vehicle tyre with a tread having at least one shoulder-side profile rib (1) which is delimited by a circumferential channel (2) and which has transverse channels (3), said transverse channels ending in front of the circumferential channel (2) and having transverse-channel flanks (7, 8) and transverse-channel edges (4, 5), wherein the tread-inner-side end of each transverse channel (3) is adjoined by a respective additional channel (10) which ends within the shoulder-side profile rib (1), which extends in plan view at an angle (δ) of up to/down to ± 35° to the circumferential direction, and which has a tread-inner-side channel flank (12a) ending at a tread-inner-side channel edge (11a) and has a tread-outer-side channel flank (12b) ending at a tread-outer-side channel edge (11b) and has a channel base (12c) with an opening-out edge (12c') at the transverse channel (3), **characterized**
**in that**, at at least one transverse-channel flank (7) of each transverse channel (3), the transverse-channel flank (7) is adjoined by a bevel (7a) with a bevel edge (7a'), said bevel extending to the transverse-channel edge (4) and forming an inclined surface,
wherein, at the inlet of the additional channel (10), there is formed an outwardly curved corner surface (13) which extends between the tread-outer-side channel flank (12b) of said additional channel and the bevel (7a) adjoining the transverse-channel flank (7) and which has a radially outer delimitation edge (13a), extending between the tread-outer-side channel edge (11b) of the additional channel (10) and the transverse-channel edge (4) to which the bevel (7a) extends, on the rib outer surface (1a) and has a radially inner delimitation edge (13b), extending to the bevel edge (7a'), on the transverse-channel flank (7) adjoined by the bevel (7a),
wherein the corner surface (13) is curved in such a way that its radially outer delimitation edge (13a) extends arcuately in plan view and its radially inner delimitation edge (13b), proceeding from the bevel edge (7a'), extends arcuately radially inwards and towards the opening-out edge (12c') of the channel base (12c) towards the additional channel (10).

2. Pneumatic vehicle tyre according to Claim 1, **characterized in that**, in plan view, the additional channel (10) is inclined in such a way that its channel end situated at the transverse channel (3) - in comparison with its other channel end - is closer to the lateral periphery of the ground contact area (line l).

3. Pneumatic vehicle tyre according to Claim 1 or 2, **characterized in that** the radially outer delimitation edge (13a) of the corner surface (13) has a first length (l₁), projected into the axial direction, of 1.0 mm to 3.0 mm and has a second length (l₂), projected into the circumferential direction, of 1.0 mm to 3.0 mm.

4. Pneumatic vehicle tyre according to one of Claims 1 to 3, **characterized in that** the corner surface (13) continuously adjoins both the bevel (7a) adjoining the transverse-channel flank (7) and the tread-outer-side channel flank (12b) of the additional channel (10), and
**in that** the radially outer delimitation edge (13a) of the corner surface (13) continuously adjoins both the transverse-channel edge (4) to which the bevel (7a) extends and the tread-outer-side channel edge (11b) of the additional channel (10).

5. Pneumatic vehicle tyre according to one of Claims 1 to 4, **characterized in that** the bevel edge (7a') of the bevel (7a) adjoining the transverse-channel flank (7) extends at a constant depth (t_{F}), determined in a radial direction, of 0.5 mm to 2.0 mm, in particular of 1.0 mm to 1.5 mm.

6. Pneumatic vehicle tyre according to one of Claims 1 to 5, **characterized in that** the additional channel (10) - in each case at the level of the rib outer surface (1a) - has a length (l_{ZR}), based on its channel midline (m_{ZR}) and projected into the circumferential direction, of 10.0 mm to 25.0 mm, in particular of 15.0 mm to 20.0 mm, and/or
has an in particular constant width (b_{ZR}), measured perpendicularly to its channel midline (m_{ZR}), of 0.5 mm to 4.0 mm, in particular of 1.0 mm to 3.5 mm, particularly preferably of 1.5 mm to 3.0 mm.

7. Pneumatic vehicle tyre according to one of Claims 1 to 6, **characterized in that**, in the region of the channel base (12c), the additional channel (10) has a depth (t_{ZR}), determined in the radial direction, which increases in the direction of the opening-out edge (12c') of the channel base (12c) and which has a value (t_{ZR}, _{MAX}) at the opening-out edge (12c') of 2.0 mm to 4.0 mm, in particular of 2.5 mm to 3.5 mm.

8. Pneumatic vehicle tyre according to Claim 7, **characterized in that** the depth (t_{ZR}) of the additional channel (10) in the region of the channel base (12c) has at the shallowest point of the additional channel (10) a value (t_{ZR}, _{MIN}) of up to 1.0 mm, in particular of 0.5 mm to 1.0 mm, or
**in that** the additional channel (10), along with its channel base (12c), runs out at its channel end remote from the transverse channel (3) to the rib outer surface (1a).

9. Pneumatic vehicle tyre according to one of Claims 1 to 8, **characterized in that** the angle (δ) at which the additional channel (10) extends to the circumferential direction is up to/down to ± 25°, in particular of ± 10° to ± 20°.

10. Pneumatic vehicle tyre according to one of Claims 1 to 9, **characterized in that** the additional channel (10) extends rectilinearly in plan view.

11. Pneumatic vehicle tyre according to Claim 10, **characterized in that** the corner surface (13), viewed in any radially oriented section plane extending perpendicularly to the channel midline (m_{ZR}) of the additional channel (10) in plan view, extends arcuately, and/or
**in that** the corner surface (13), viewed in any radially oriented section plane extending parallel to the channel midline (m_{ZR}) of the additional channel (10) in plan view, appears as a straight line.

12. Pneumatic vehicle tyre according to one of Claims 1 to 11, **characterized in that**, at its tread-inner-side end, the transverse channel (3) has a curved end flank (9) which extends between the tread-inner-side channel flank (12a) of the additional channel (10) and the transverse-channel flank (8) situated opposite the corner surface (13),
which continuously adjoins the transverse-channel flank (8) and the tread-inner-side channel flank (12) of the additional channel (10), and
which has on the rib outer surface (1a) an arcuately extending delimitation edge (9a) which continuously adjoins the tread-inner-side channel edge (11a) of the additional channel (10) and the corresponding transverse-channel edge (5).

13. Pneumatic vehicle tyre according to one of Claims 1 to 12, **characterized in that** the bevel (7a) adjoining the transverse-channel flank (7), viewed in a cross section perpendicular to the associated transverse-channel edge (4), extends at an angle (γ) of 35° to 55°, in particular of 40° to 50°, to the radial direction.

14. Pneumatic vehicle tyre according to one of Claims 1 to 13, **characterized in that** the bevel (7a) adjoining the transverse-channel flank (7) extends at least up to the lateral periphery (line l) of the ground contact area of the tread.

## Revendications

1. Pneu de véhicule comprenant une bande de roulement avec au moins une nervure de profil (1) côté épaulement, délimitée par une rainure circonférentielle (2) et présentant des rainures transversales (3) qui se terminent devant la rainure circonférentielle (2) et qui présentent des flancs de rainure transversale (7, 8) et des bords de rainure transversale (4, 5), une rainure supplémentaire (10) adjacente à l'extrémité de face interne de la bande de roulement de chaque rainure transversale (3), qui se termine respectivement à l'intérieur de la nervure de profil (1) côté épaulement, s'étendant, dans une vue en plan, selon un angle (δ) pouvant atteindre ± 35° par rapport à la direction circonférentielle, présentant un flanc de rainure de face interne de bande de roulement (12a) se terminant au niveau d'un bord de rainure de face interne de bande de roulement (11a), un flanc de rainure de face externe de bande de roulement (12b) se terminant au niveau d'un bord de rainure de face externe de bande de roulement (11b), et un fond de rainure (12c) présentant un bord d'embouchure (12c') au niveau de la rainure transversale (3), **caractérisé**
**en ce que**, sur au moins un flanc de rainure transversale (7) de chaque rainure transversale (3), un chanfrein (7a) ayant un bord de chanfrein (7a') est placé au niveau du flanc de rainure transversale (7), ledit chanfrein formant une face inclinée et atteignant le bord de rainure transversale (4),
une face de coin incurvée vers l'extérieur (13) étant formée au niveau de l'embouchure de la rainure supplémentaire (10), s'étendant entre son flanc de rainure de face externe de bande de roulement (12b) et le chanfrein (7a) placé au niveau du flanc de rainure transversale (7), présentant, sur la face externe de nervure (1a), un bord de délimitation radialement externe (13a) s'étendant entre le bord de rainure de face externe de bande de roulement (11b) de la rainure supplémentaire (10) et le bord de rainure transversale (4) jusqu'auquel s'étend le chanfrein (7a), et présentant, sur le flanc de rainure transversale (7) au niveau duquel le chanfrein (7a) est placé, un bord de délimitation radialement interne (13b) s'étendant jusqu'au bord de chanfrein (7a'),
la face de coin (13) étant incurvée de sorte que son bord de délimitation radialement externe (13a) s'étend, dans une vue en plan, en forme d'arc, et son bord de délimitation radialement interne (13b) s'étendant à partir du bord de chanfrein (7a') radialement vers l'intérieur sous la forme d'un arc et s'étendant en direction du bord d'embouchure (12c') du fond de rainure (12c) vers la rainure supplémentaire (10).

2. Pneu de véhicule selon la revendication 1, **caractérisé en ce que** la rainure supplémentaire (10) est inclinée, dans une vue en plan, de sorte que son extrémité de rainure située au niveau de la rainure transversale (3) se trouve - par rapport à son autre extrémité de rainure - plus près du bord latéral de la surface de contact avec le sol (ligne I).

3. Pneu de véhicule selon la revendication 1 ou 2, **caractérisé en ce que** le bord de délimitation radialement externe (13a) de la face d'angle (13) présente une première longueur (l₁), projetée dans la direction axiale, de 1,0 mm à 3,0 mm et une deuxième longueur (l₂), projetée dans la direction circonférentielle, de 1,0 mm à 3,0 mm.

4. Pneu de véhicule selon l'une quelconque des revendications 1 à 3,
**caractérisé en ce que** la face d'angle (13) est raccordée de manière continue aussi bien au chanfrein (7a) placé au niveau du flanc de rainure transversale (7) qu'au flanc de rainure de face externe de bande de roulement (12b) de la rainure supplémentaire (10) et
**en ce que** le bord de délimitation radialement externe (13a) de la face d'angle (13) est raccordé de manière continue aussi bien au bord de rainure transversale (4) jusqu'auquel s'étend le chanfrein (7a), qu'au bord de rainure de face externe de bande de roulement (11b) de la rainure supplémentaire (10).

5. Pneu de véhicule selon l'une quelconque des revendications 1 à 4, **caractérisé en ce que** le bord de chanfrein (7a') du chanfrein (7a) placé au niveau du flanc de rainure transversale (7) s'étend à une profondeur (t_{F}) constante, déterminée dans la direction radiale, de 0,5 mm à 2,0 mm, en particulier de 1,0 mm à 1,5 mm.

6. Pneu de véhicule selon l'une quelconque des revendications 1 à 5,
**caractérisé en ce que** la rainure supplémentaire (10) présente - respectivement au niveau de la face externe de nervure (1a) - une longueur (l_{ZR}), projetée dans la direction circonférentielle, de 10,0 mm à 25,0 mm, en particulier de 15,0 mm à 20,0 mm, mesurée par rapport à sa ligne médiane de rainure (m_{ZR}) et/ou
une largeur (b_{ZR}), mesurée perpendiculairement à sa ligne médiane de rainure (m_{ZR}), et en particulier constante, de 0,5 mm à 4,0 mm, en particulier de 1,0 mm à 3,5 mm, de manière particulièrement préférée de 1,5 mm à 3,0 mm.

7. Pneu de véhicule selon l'une quelconque des revendications 1 à 6, **caractérisé en ce que** la rainure supplémentaire (10) présente dans la zone du fond de rainure (12c) une profondeur (t_{ZR}), déterminée dans la direction radiale, augmentant en direction du bord d'embouchure (12c') du fond de rainure (12c), laquelle présente, au niveau du bord d'embouchure (12c'), une valeur (t_{ZR}, _{MAX}) de 2,0 mm à 4,0 mm, en particulier de 2,5 mm à 3,5 mm.

8. Pneu de véhicule selon la revendication 7,**caractérisé en ce que** la profondeur (t_{ZR}) de la rainure supplémentaire (10) dans la zone du fond de rainure (12c) à l'endroit le moins profond de la rainure supplémentaire (10) présente une valeur (t_{ZR}, _{MIN}) pouvant atteindre 1,0 mm, en particulier de 0,5 mm à 1,0 mm, ou en ce que la rainure supplémentaire (10) se termine, conjointement avec son fond de rainure (12c), vers la face externe de nervure (1a) au niveau de son extrémité de rainure tournée à l'opposé de la rainure transversale (3).

9. Pneu de véhicule selon l'une quelconque des revendications 1 à 8, **caractérisé en ce que** l'angle (δ) sous lequel s'étend la rainure supplémentaire (10) par rapport à la direction circonférentielle peut atteindre ± 25°, et est en particulier de ± 10° à ± 20°.

10. Pneu de véhicule selon l'une quelconque des revendications 1 à 9, **caractérisé en ce que** la rainure supplémentaire (10) s'étend de manière rectiligne dans une vue en plan.

11. Pneu de véhicule selon la revendication 10, **caractérisé en ce que** la face d'angle (13), considérée dans chaque plan de coupe aligné dans la direction radiale et s'étendant, dans une vue en plan, perpendiculairement à la ligne médiane de rainure (m_{ZR}) de la rainure supplémentaire (10), s'étend sous en forme d'arc et/ou
**en ce que** la face d'angle (13), considérée dans chaque plan de coupe orienté dans la direction radiale et s'étendant, dans une vue en plan, parallèlement à la ligne médiane de rainure (m_{ZR}) de la rainure supplémentaire (10), apparaît comme une ligne droite.

12. Pneu de véhicule selon l'une quelconque des revendications 1 à 11,
**caractérisé en ce que** la rainure transversale (3) présente, au niveau de son extrémité de face interne de bande de roulement, un flanc d'extrémité (9) courbé s'étendant entre le flanc de rainure de face interne de bande de roulement (12a) de la rainure supplémentaire (10) et le flanc de rainure transversale (8) opposé à la face d'angle (13),
lequel est raccordé de manière continue au flanc de rainure transversale (8) et de manière continue au flanc de rainure de face interne de bande de roulement (12) de la rainure supplémentaire (10) et
lequel présente, sur la face externe de nervure (1a), un bord de délimitation (9a) qui s'étend en forme d'arc et qui est raccordé de manière continue au bord de rainure de face interne de bande de roulement (11a) de la rainure supplémentaire (10) et de manière continue au bord de rainure transversale (5) correspondant.

13. Pneu de véhicule selon l'une quelconque des revendications 1 à 12, **caractérisé en ce que** le chanfrein (7a) placé au niveau du flanc de rainure transversale (7), considéré en coupe transversale perpendiculairement au bord de rainure transversale (4) associé, s'étend, par rapport à la direction radiale, selon un angle (γ) de 35° à 55°, en particulier de 40° à 50°.

14. Pneu de véhicule selon l'une quelconque des revendications 1 à 13, **caractérisé en ce que** le chanfrein (7a) placé au niveau du flanc de rainure transversale (7) s'étend au moins jusqu'au bord latéral (ligne l) de la surface de contact avec le sol de la bande de roulement.
